# EUROPEAN PATENT APPLICATION

(11) **EP 4 383 036 A1**
(43) Date of publication of application: **12.06.2024**
(21) Application number: 22212568.4
(22) Date of filing: 09.12.2022
(51) Int. Cl.: G05D 1/02

(54) **DETERMINING AN OPERATING AREA FOR A VEHICLE**

(71) Applicant: Sandvik Mining and Construction Oy, 33330 Tampere (FI)
(72) Inventor: KALLIO, Janne, 33330 TAMPERE (FI); LEHTINEN, Antti, 33300 Tampere (FI)
(74) Representative: Sandvik

(57) **Abstract**

Disclosed is an apparatus, method and computer program product for monitoring an isolated working area, wherein one or more autonomous work machines are located within the isolated operating area, the method comprising receiving an indication, wherein the indication indicates that a mining vehicle that is at least partly operated manually, is to enter the isolated working area, determining, based at least partly on the indication, an operating area, for the mining vehicle, wherein the operating area is located within the isolated working area, and the operating area comprises at least one of a route area or a work area associated with the mining vehicle, reserving the operating area for the mining vehicle, wherein reserving comprises imposing access restrictions to the operating area, and indicating, to the mining vehicle, an access permission to the operating area.

## Description

### Field

The present application relates to monitoring and operating an isolated working area, wherein one or more work machines capable of functioning at least partly in an autonomous manner are located within the isolated operating area.

### Background

In some working areas, there may be benefits to be achieved by having operations performed by work machines that are capable of operating, at least partly, in an autonomous manner such that a person is not required to be present with the work machine. Yet, such machines may be capable of cause significant damage and thus in order to avoid unintentional damages, such work machines, that are capable to operate at least partly in an autonomous manner, may be limited to an area within which no other machines, or personnel, are allowed to be present while the work machines are operating.

### Brief Description

The scope of protection sought for various embodiments of the invention is set out by the independent claims. The example embodiments and features, if any, described in this specification that do not fall under the scope of the independent claims are to be interpreted as examples useful for understanding various embodiments of the invention.

According to a first aspect there is provided an apparatus comprising means for: receiving an indication, wherein the indication indicates that a mining vehicle that is at least partly operated manually, is to enter the isolated working area, determining, based at least partly on the indication, an operating area for the mining vehicle, wherein the operating area is located within the isolated working area, and the operating area comprises at least one of a route area or a work area associated with the mining vehicle, reserving the operating area for the mining vehicle, wherein reserving comprises imposing access restrictions to the operating area, and indicating, to the mining vehicle, an access permission to the operating area.

In some exemplary embodiments according to the first aspect, the means comprises at least one processor, and at least one memory, including a computer program code, wherein the at least one memory and the computer program code are configured, with the at least one processor, to cause the performance of the apparatus.

According to a second aspect there is provided an apparatus comprising at least one processor, and at least one memory including a computer program code, wherein the at least one memory and the computer program code are configured, with the at least one processor, to cause the apparatus to: receive an indication, wherein the indication indicates that a mining vehicle that is at least partly operated manually, is to enter the isolated working area, determine, based at least partly on the indication, an operating area for the mining vehicle, wherein the operating area is located within the isolated working area, and the operating area comprises at least one of a route area or a work area associated with the mining vehicle, reserve the operating area for the mining vehicle, wherein reserving comprises imposing access restrictions to the operating area, and indicate, to the mining vehicle, an access permission to the operating area.

According to a third aspect there is provided a method comprising: receiving an indication, wherein the indication indicates that a mining vehicle that is at least partly operated manually, is to enter the isolated working area, determining, based at least partly on the indication, an operating area for the mining vehicle, wherein the operating area is located within the isolated working area, and the operating area comprises at least one of a route area or a work area associated with the mining vehicle, reserving the operating area for the mining vehicle, wherein reserving comprises imposing access restrictions to the operating area, and indicating, to the mining vehicle, an access permission to the operating area.

In some example embodiments according to the third aspect, the method is a computer-implemented method.

According to a fourth aspect there is provided a computer program comprising instructions for causing an apparatus to perform at least the following: receive an indication, wherein the indication indicates that a mining vehicle that is at least partly operated manually, is to enter the isolated working area, determine, based at least partly on the indication, an operating area for the mining vehicle, wherein the operating area is located within the isolated working area, and the operating area comprises at least one of a route area or a work area associated with the mining vehicle, reserve the operating area for the mining vehicle, wherein reserving comprises imposing access restrictions to the operating area, and indicate, to the mining vehicle, an access permission to the operating area.

According to a fifth aspect there is provided a computer program comprising instructions stored thereon for performing at least the following: receiving an indication, wherein the indication indicates that a mining vehicle that is at least partly operated manually, is to enter the isolated working area, determining, based at least partly on the indication, an operating area for the mining vehicle, wherein the operating area is located within the isolated working area, and the operating area comprises at least one of a route area or a work area associated with the mining vehicle, reserving the operating area for the mining vehicle, wherein reserving comprises imposing access restrictions to the operating area, and indicating, to the mining vehicle, an access permission to the operating area.

According to a sixth aspect there is provided a non-transitory computer readable medium comprising program instructions for causing an apparatus to perform at least the following: receive an indication, wherein the indication indicates that a mining vehicle that is at least partly operated manually, is to enter the isolated working area, determine, based at least partly on the indication, an operating area for the mining vehicle, wherein the operating area is located within the isolated working area, and the operating area comprises at least one of a route area or a work area associated with the mining vehicle, reserve the operating area for the mining vehicle, wherein reserving comprises imposing access restrictions to the operating area, and indicate, to the mining vehicle, an access permission to the operating area.

According to a seventh aspect there is provided a non-transitory computer readable medium comprising program instructions stored thereon for performing at least the following: receiving an indication, wherein the indication indicates that a mining vehicle that is at least partly operated manually, is to enter the isolated working area, determining, based at least partly on the indication, an operating area for the mining vehicle, wherein the operating area is located within the isolated working area, and the operating area comprises at least one of a route area or a work area associated with the mining vehicle, reserving the operating area for the mining vehicle, wherein reserving comprises imposing access restrictions to the operating area, and indicating, to the mining vehicle, an access permission to the operating area.

According to an eighth aspect there is provided an apparatus comprising means for: transmitting an indication to a monitoring system configured to control access to an isolated working area, wherein the indication indicates that the mining vehicle is to enter the isolated working area, and wherein one or more autonomous work machines are located within the isolated working area, receiving, from the monitoring system, information regarding an operating area comprising at least one of a route area or a working area for the mining vehicle, wherein the operating area is located within the isolated working area, receiving, from the monitoring system, an access permission to the isolated working area, and causing the mining vehicle to proceed to the operating area.

In some exemplary embodiments according to the eighth aspect, the means comprises at least one processor, and at least one memory, including a computer program code, wherein the at least one memory and the computer program code are configured, with the at least one processor, to cause the performance of the apparatus.

According to a ninth aspect there is provided an apparatus comprising at least one processor, and at least one memory including a computer program code, wherein the at least one memory and the computer program code are configured, with the at least one processor, to cause the apparatus to: transmit an indication to a monitoring system configured to control access to an isolated working area, wherein the indication indicates that the mining vehicle is to enter the isolated working area, and wherein one or more autonomous work machines are located within the isolated working area, receive, from the monitoring system, information regarding an operating area comprising at least one of a route area or a working area for the mining vehicle, wherein the operating area is located within the isolated working area, receive, from the monitoring system, an access permission to the isolated working area, and cause the mining vehicle to proceed to the operating area.

According to a tenth aspect there is provided a method comprising: transmitting an indication to a monitoring system configured to control access to an isolated working area, wherein the indication indicates that the mining vehicle is to enter the isolated working area, and wherein one or more autonomous work machines are located within the isolated working area, receiving, from the monitoring system, information regarding an operating area comprising at least one of a route area or a working area for the mining vehicle, wherein the operating area is located within the isolated working area, receiving, from the monitoring system, an access permission to the isolated working area, and causing the mining vehicle to proceed to the operating area.

In some example embodiments according to the tenth aspect, the method is a computer-implemented method.

According to an eleventh aspect there is provided a computer program comprising instructions for causing an apparatus to perform at least the following: transmit an indication to a monitoring system configured to control access to an isolated working area, wherein the indication indicates that the mining vehicle is to enter the isolated working area, and wherein one or more autonomous work machines are located within the isolated working area, receive, from the monitoring system, information regarding an operating area comprising at least one of a route area or a working area for the mining vehicle, wherein the operating area is located within the isolated working area, receive, from the monitoring system, an access permission to the isolated working area, and cause the mining vehicle to proceed to the operating area.

According to a twelfth aspect there is provided a computer program comprising instructions stored thereon for performing at least the following: transmitting an indication to a monitoring system configured to control access to an isolated working area, wherein the indication indicates that the mining vehicle is to enter the isolated working area, and wherein one or more autonomous work machines are located within the isolated working area, receiving, from the monitoring system, information regarding an operating area comprising at least one of a route area or a working area for the mining vehicle, wherein the operating area is located within the isolated working area, receiving, from the monitoring system, an access permission to the isolated working area, and causing the mining vehicle to proceed to the operating area.

According to a thirteenth aspect there is provided a non-transitory computer readable medium comprising program instructions for causing an apparatus to perform at least the following: transmit an indication to a monitoring system configured to control access to an isolated working area, wherein the indication indicates that the mining vehicle is to enter the isolated working area, and wherein one or more autonomous work machines are located within the isolated working area, receive, from the monitoring system, information regarding an operating area comprising at least one of a route area or a working area for the mining vehicle, wherein the operating area is located within the isolated working area, receive, from the monitoring system, an access permission to the isolated working area, and cause the mining vehicle to proceed to the operating area.

According to a fourteenth aspect there is provided a non-transitory computer readable medium comprising program instructions stored thereon for performing at least the following: transmitting an indication to a monitoring system configured to control access to an isolated working area, wherein the indication indicates that the mining vehicle is to enter the isolated working area, and wherein one or more autonomous work machines are located within the isolated working area, receiving, from the monitoring system, information regarding an operating area comprising at least one of a route area or a working area for the mining vehicle, wherein the operating area is located within the isolated working area, receiving, from the monitoring system, an access permission to the isolated working area, and causing the mining vehicle to proceed to the operating area.

### List of Drawings

In the following, the invention will be described in greater detail with reference to the embodiments and the accompanying drawings, in which
FIG. 1A illustrates an example embodiment of an operating site.
FIG. 1B illustrates an example embodiment of a passage control unit.
FIG. 2 illustrates an example embodiment of a safety system.
FIG. 3A and 3B illustrate flow charts according to example embodiments.
FIG. 4 illustrates an example embodiment in which an operating site comprises an isolated working area.
FIG. 5 illustrates an example embodiment of an apparatus.

### Description of Embodiments

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

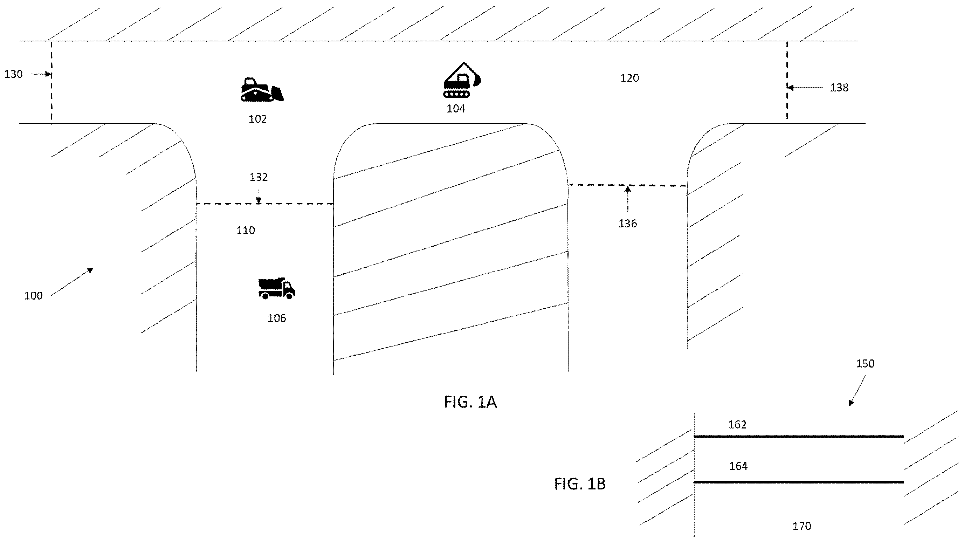

FIG. 1A illustrates an example embodiment of an operating site 100. An operating site may be understood as an area within which industrial operations may be performed. It is to be noted that an operating site may also be understood as a working site. The operating site 100 may be a geographically limited area with restricted access. The operating site 100 may be located within a building, it may be an underground area and/or an area outside above the ground surface. Examples of an operating site comprise a mine, a roadwork site, a railroad worksite, and a terminal for handling cargo. In this example embodiment, the operating site 100 is a mine.

As the operating site 100 is an area for industrial operations, there may be work machines, such as mining vehicles 102, 104, 106 used for industrial operations, operating within the operating area. The mining vehicles 102, 104, 106 may be mobile meaning that the mining vehicles may move within the operating site 100. In some example embodiments, at least some of the mining vehicles 102, 104 and 106 may be partially or fully automated mining vehicles that are capable of performing operations autonomously without, or with limited, control from a user, that may be a person working in the operating site 100. For example, the person may work in a remote location, such as a monitoring room, of the operating site 100, and thus be capable of controlling the automated, or partially automated, mining vehicle remotely. An automated mining vehicle may be configured to autonomously perform one or more tasks. It is to be noted that the one or more tasks may be comprised in an operation that can be performed by a work machine such as a mining vehicle and as such, a work machine, when operating, may perform one or more tasks. An automated mining vehicle operating in an automatic mode may be configured to, for example, receive a task to be performed, perceive the environment of the mining vehicle, as the mining vehicle is a mobile mining vehicle, and autonomously perform the task while taking the environment into account. It is to be noted though that for example due to safety aspects, an automated, or partially automated mining vehicle configured to operate independently may be taken into control by an external entity at any time. The external entity may be for example a user or a safety system or any other suitable external entity. Examples of work machines, which may be mining vehicles such as the mining vehicles 102, 104 and 106, comprise trucks, bulldozers, dumpers, vans, rock drilling or milling rigs, gantry cranes, mobile reinforcement machines, mechanical cutting machines and loaders or any other kind of work machines suitable for performing an operation within the operating site 100.

The operating site 100 may further be divided into different areas such as areas 110 and 120, which may also be understood as operation zones within the operating site 100. By dividing the operating site 100 into smaller areas, there may be an advantage that some operations may be limited to certain area and/or access may be limited to some parts of the operating site 100. For example, the area 110 may be reserved for automated mining vehicles such that manually operated mining vehicles and/or personnel is not allowed to enter the area 110 unless operations performed by the autonomous mining vehicles are stopped. Thus, the area 110 may be called as an isolated working area. An isolated working area may be reserved for at least one mining vehicles, that is a mobile mining vehicle, operating in a particular mode of operation. A mode of operation may comprise, for example, an automatic mode comprising autonomous operation of the automated mining vehicle or manual mode comprising manual operation of the mining vehicle. An isolated working area may, therefore, be reserved for one or more automated mining vehicles or one or more manually operated mining vehicles. Reserving an area, within the operating site 100, may comprise providing restricted access to the area by one or more passage control units. It is to be noted that a manually operated mining vehicle may be any vehicle that is operated by a person. Thus, if a mining vehicle is mobile and a person is driving it, it may also be understood to be a manually operated mining vehicle.

An isolated working area may be isolated using one or more passage control units that comprise a mechanism configured to perform passage control. A passage control unit may comprise a physical access barrier for restricting access by work machines, such as mining vehicles, to the isolated working area and preventing unauthorized personnel from entering the isolated working area when one or more mobile mining vehicles are operating within the isolated working area. For example, a passage control unit may comprise an access barrier such as a gate. A passage control unit may comprise, for example, an electronic access barrier. Alternatively, in some other example embodiments, any other suitable passage control mechanism may be utilized in a passage control unit. A passage control unit may further comprise at least one detection device for detecting people and/or mining vehicles entering and/or exiting the isolated working area. A detection device may comprise, for example, a light curtain, or some other suitable detection device. One or more passage control units may be comprised in a safety system that is configured to monitor safety of the isolated working area. Further, the one or more passage control units may be operatively coupled to a monitoring system that is configured to monitor the operating site 100. The monitoring system may be configured to communicate with one or more communication units located within the operating site 100. A communication unit may comprise, for example, a communication unit included in a work machine, a communication unit included in a cap lamp of a person, or a communication unit included in a structure such as a communication unit included in a passage control unit. Communicating with one or more communication units may comprise receiving information from and/or sending information to the one or more communication units. For example, the monitoring system may be configured to receive data from the operating site 100 as well as from work machines, user etc. The monitoring system may also be configured to provide data and/or instructions to work machines within the operating site 100. The monitoring system may additionally, or alternatively, be configured to receive a user input from a person such as a person monitoring the operations within the operating site 100.

According to an example embodiment, a passage control unit may be an optoelectronic guard detector, such as a guard detector based on the use of a light curtain or photocells. Alternatively other kind of devices such as laser scanning devices and safety mats, may be utilized to detect movement of a mobile object. A passage control unit may, in some example embodiments, be configured to detect the direction of motion of the mobile object. For example, the passage control unit may be configured to detect if the mobile object is entering or exiting the isolated working area.

In the example of FIG. 1A, there are passage control units 130, 132, 136 and 138, such as electronic access barriers, which are configured to isolate the working area 120. As the working area 120 is isolated, passage to and from the isolated working area 120 is controlled by the electronic access barriers 130, 132, 136 and 138. The isolated working area 120 may be dedicated, for example, to autonomously operating mining vehicles. It is to be noted that in general, an isolated working area may be isolated for any purpose that benefits from there being a control for entering and exiting the isolated working area. The example embodiment of FIG. 1A is to be understood as a simplified example of an operating site 100 and in some other example embodiments, there may be additional units, sub-systems or elements. Further, in different example embodiments, the layout of the operating site 100 may be different, and the layout of an operating site 100 may also change over time.

FIG. 1B illustrates an example embodiment of a passage control unit such as passage control units 130, 132, 136 and/or 138. In this example embodiment, there is a passage control unit located in a corridor 150 such as a tunnel of an operating site. A passage control unit may comprise a plurality of monitoring units. In the example of Figure 1B, the passage control unit comprises two monitoring units 162 and 164 that together form the passage control unit. The monitoring units 162 and 164 are placed at a pre-determined distance from each other and the monitoring unit 162 is configured to monitor entrance to the area 170, which is an isolated working area, and the monitoring unit 164 is configured to monitor exiting from the area 170, which is an isolated working area comprised in the operating site. The pre-determined distance may be determined for example such that if a mining vehicle is detected to enter or exit through the passage control unit without a permission, the monitoring unit, that first detects the mining vehicle may trigger, or cause triggering of, a stop command to the mining vehicle and the distance between the monitoring units 162 and 164 is sufficient for the mining vehicle to stop moving with respect to its location. In other words, the mining vehicle is prevented from reaching the monitoring unit. The monitoring units 162 and 164 may each be comprised in, or connected to, an entity that may be understood as a gate. Alternatively, an entity understood as a gate may comprise both of the monitoring units 162 and 164. For example, if a mining vehicle is to exit the isolated working area 170, the monitoring unit 164 detects the corresponding movement of the mining vehicle and if a moving object is to enter the isolated working area 170, then the monitoring unit 162 detects the movement of the moving object. By having two monitoring units 162 and 164 at a pre-determined distance from each other may have a benefit of helping to prevent a mining vehicle from accidentally proceeding to the area on the other side of the passage control unit thereby reducing a number of accidents as well. The monitoring units 162 and 164 may comprise, for example, a gate switch that is configured to recognize if a gate is open of closed or they may comprise light curtains using laser-based detection of movement.

It is to be noted that although in the example embodiment of FIG. 1B there are two monitoring units 162 and 164, in some example embodiments one monitoring unit may be sufficient. For example, if the corridor 150 is capable of physically preventing a mining vehicle exiting from the area for example by being narrower than the mining vehicle or by comprising an obstacle that prevent the mining vehicle from entering the area, then it may be enough to have one monitoring unit for monitoring a mobile object that is moving and is about to enter the isolated working area 170 for which the passage control unit is performing monitoring.

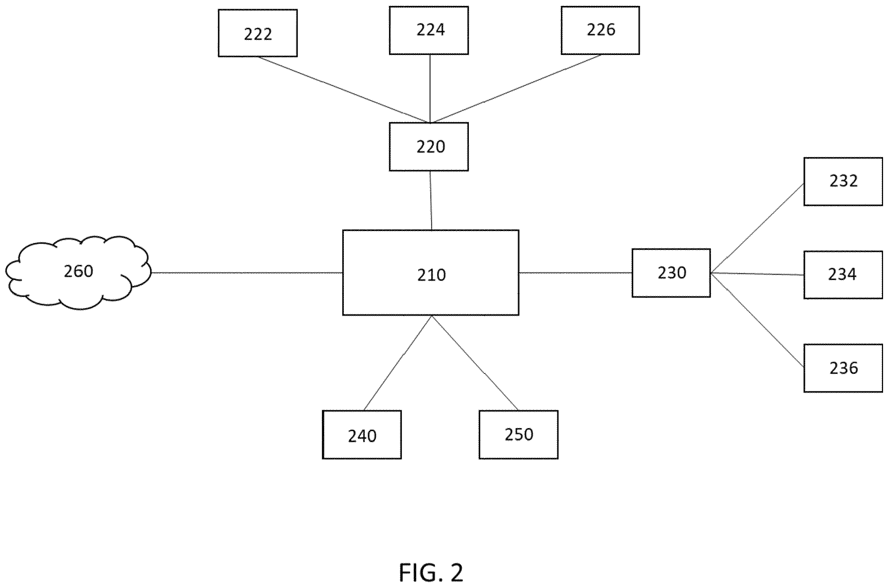

FIG. 2 illustrates a safety system that may be used within an operating site such as operating site 100 of the example embodiment illustrated in FIG. 1A. The safety system may be used for example with an isolated working area such as area 120 illustrated in the example embodiment of FIG. 1A. The safety system comprises a control unit 210, which may be understood as a logical unit that comprises at least one controller. The control unit 210 is connected to functional units 220-250. It is to be noted that in some other example embodiments there may be different number of functional units the control unit 210 is connected to. The functional units 222, 224, 226, 232, 234, and 236 in this example embodiment are passage control units such as electronic access barriers 130, 132, 134, 136 and 138 in the example of FIG. 1A. These functional units may be configured to detect movement to or from an isolated working area. The movement may be caused for example by a mobile object such as a person, by a mining vehicle or any other mobile object. The movement of the mobile object may be detected based on any suitable technology, for example, by a light curtain having one or more laser transmitters transmitting a laser beam across the passage-controlled part of the operating site. The transmitted lasers are then correspondingly received by a receiver. The safety system is configured to receive an indication in case the laser is not received by the receiver as expected and thus the indication may be interpreted, by the control unit 210 to indicate movement to or from an isolated working area. The control unit 210 is configured to then determine a corresponding action. For example, the control unit 210 may be configured to send an indication to mining vehicles within the operating site requesting them to perform a safety operation such as stopping and preventing movement of the mining vehicle. Further, the control unit 210 may be connected over any suitable network 260 to other devices and may also be configured to provide an indication of the detected movement to one or more other devices using the network 260.

In this example embodiment, the detection of movement of a mobile object may be understood to comprise at least one of the following events: a) the mobile object is moving close to the passage control unit and intending to enter into the zone; b) the mobile object holds still close to the passage control unit and is waiting to enter into the zone; c) the mobile object has actually already passed the passage control unit and entered into the zone. The stage of the detection may depend on the applied technology and/or configuration of the passage control units. A passage control unit may, in some example embodiments, be configured to detect the direction of motion of the mobile object and may also be configured to provide the direction information to the control unit 210.

Additionally, the safety system may further comprise functional units that comprise identification units 230, 220. The identification units 220, 230 may be configured to identify the mobile object entering or exiting the isolated working area. The identification of the mobile objects may include the identification of the type of the mobile object, such as if the mobile object is an automated mining vehicle, an unmanned remotely controllable mining vehicle or a manned mining vehicle, or a human being. The identification of the mobile object may optionally further comprise the identifying of a particular person within a mining vehicle. The identification units 220, 230 may further be configured to provide an indication regarding the mobile object and/or the identified person to the control unit 210.

In some example embodiments, an identification unit may comprise for example a reader device, such as an RFID scanner, or a camera. For example, the RFID scanner may be able to read an RFID tag comprised in the mobile object, based on which the mobile object may be identified. Alternatively, in some example embodiments, the identification unit may also be a device which is able to identify the mobile object without any counterpart identification element comprised in the mobile object. For example, the identification unit may comprise a device that provides a connection with a control unit of the mobile object and receives an identifier from the mobile object via a network connection such as wireless local area network (WLAN), for example. In yet another example embodiment, the identification unit may be configured to provide identification information, such as an image of the mobile object, to the control unit 210, and the control unit 210 may be configured to then perform the identification of the mobile object based on the received image.

In this example embodiment, the safety system further comprises functional units 240 and 250 that comprise indication units. An indication unit may be comprised in a passage control unit in some other example embodiments. The indication units 240 and 250 may be configured to indicate further control information for the mobile object to enter into or exit from the isolated working area.

The safety system illustrated in this example embodiment may further comprise communication links between the functional units. The communication links may be established as unidirectional or bidirectional communication link. The communication links may be based on any suitable technology. For example, the communication link may be based on a wireless local area networking, such as IEEE 802.11 or 802.16 based communications is applied.

The safety system of this example embodiment may also be connected to a control unit that is comprised in a mining vehicle located in the isolated working area. Thus, centralized safety control may be applied within the isolated working area. In some example embodiments, it may be a pre-requisite for a mining vehicle to enter into the isolated working area that it is connected to the safety system. For example, the safety system may be configured to transmit the indication for the safety operation to be performed to the mining vehicle located in the isolated working area.

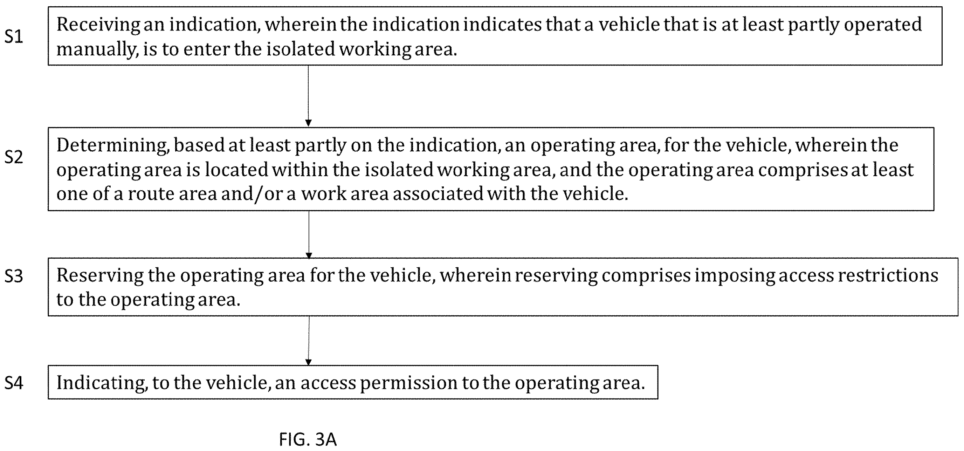

FIG. 3A illustrates a flow chart according to an example embodiment. The flow chart illustrates a method that may be performed, for example, using an apparatus such as a computing apparatus that is comprised in a monitoring system configured to monitor and/or control access to an isolated working area comprised in an operating site. Controlling access to an isolated area may comprise, for example, preventing entry into the isolated working area and/or preventing exit from the isolated working area. In this example embodiment, one or more autonomous mining vehicles are operating within the isolated working area. It is to be noted that an autonomous mining vehicle may also be called as an automated mining vehicle. In this example embodiment, first in block S1 an indication is received, wherein the indication indicates that a mining vehicle that is at least partly operated manually and may thus be understood to be a manually operated mining vehicle, is to enter the isolated working area. The indication may comprise, for example, a signal received from a communication unit of the mining vehicle or from a communication unit of a passage control unit. Thus, in this example embodiment, a mining vehicle that is operated by a driver, is to enter the isolated working area. In this example embodiment, before entering the isolated working area, the manually operated mining vehicle is to provide an indication that it wishes to enter the isolated working area. This may be required as the isolated working area may be monitored using for example a safety system and breaching a passage control unit monitoring the entrance to the isolated working area could trigger an emergency stop to the one or more autonomous mining vehicles thus halting operations within the isolated operating area. Such a halting causes lots of disturbances for example in a mining site and causes also financial losses. Therefore, the halting should not happen unless it is needed due to safety reasons for example. Thus, the manually operated mining vehicle is to indicate its wish to enter the isolated working area to the monitoring system before entering the isolated operating area. This allows the monitoring system to determine, if the mining vehicle can safely enter the isolated working area and thus unnecessary halting of operations can be avoided.

Next, in block S2, it is determined, based at least partly on the indication, an operating area for the manually operated mining vehicle, wherein the operating area is located within the isolated working area, and the operating area comprises at least one of a route area and/or a work area associated with the manually operated mining vehicle. For example, the manually operated mining vehicle may need to proceed to an area within the isolated working area such that it can perform an operation there. Thus, the area may be understood as a work area. Yet, in order to proceed to the work area, the manually operated mining vehicle may need to proceed along the isolated working area, for example, along one or more corridors within the isolated working area, to reach the work area. Thus, the area required for proceeding to the work area may be understood as a route area. Yet, in some example embodiments, the manually operated mining vehicle may need to drive through part of the isolated working area and as such it may be sufficient to determine a route area for the manually operated mining vehicle without determining a work area for the manually operated mining vehicle. The indication based on which, at least partly, the work area is determined for the manually operated mining vehicle, may indicate for example the purpose why the manually operated mining vehicle is to enter the isolated working area. The purpose may comprise the operation the mining vehicle is to perform. Alternatively, in some example embodiments, the indication may indicate the work area and its location within the isolated working area without necessarily identifying the reason more specifically. The work area, that is the work area associated with the manually operated mining vehicle, may be determined by the monitoring system for example.

Next, in block S3, the work area is reserved for the manually operated mining vehicle, wherein reserving comprises imposing access restrictions to the work area. The access restrictions may comprise, for example, restrictions that are applicable to the one or more autonomous mining vehicles and indicate to the autonomous mining vehicles that they are not allowed to enter the work area while the access restrictions are imposed. In some example embodiments, a route or a work area associated with some of the one or more autonomous mining vehicles may be adjusted according to the imposed access restrictions. The work area for the manually operated vehicle may be reserved by the monitoring system for example. Thus, in some example embodiments, the monitoring system may indicate the access restrictions to the one or more autonomous mining vehicles.

In an example embodiment, reserving the work area for the manually operated mining vehicle comprises connecting the mining vehicle to the safety system configured to monitor safety of the isolated working area, thereby enabling safety functions of autonomous mining vehicles to be activated from the manually operated mining vehicle. Connecting the manually operated mining vehicle to the safety system may comprise, for example, establishing a connection between a communication unit of the manually operated mining vehicle and the safety system thereby enabling controlling autonomous mining vehicles based on activated safety measures within the manually operated mining vehicle. For example, an emergency stop in the manually operated mining vehicle may also stop autonomous mining vehicles within the isolated working area.

In an example embodiment, connecting the manually operated mining vehicle to the safety system comprises connecting the manually operated mining vehicle in response to receiving the indication (block S1). In another example, embodiment, connecting the manually operated mining vehicle to the safety system comprises connecting the manually operated mining vehicle in response to determining an operating area for the mining vehicle (block S2).

Then, in block S4, an access permission to the operating area is indicated to the manually operated mining vehicle. In this example embodiment, the monitoring system may be configured to provide such an indication. The access permission indicates to the manually operated mining vehicle that it is now safe for the manually operated mining vehicle to enter the isolated working area along the operating area determined for the manually operated mining vehicle. Additionally, as the manually operated mining vehicle now has an access permission to the isolated working area, the safety monitoring will not cause halting of operations within the isolated working area although it detects that the manually operated mining vehicle proceeds to the isolated working area. In other words, the safety system remains activated, but it knows not to trigger safety operations while detecting that the manually operated mining vehicle enters the isolated working area. This has a benefit of allowing autonomous operations to continue while still safe permitting the manually operated mining vehicle to enter the isolated working area. The safety system may be connected to the monitoring system and/or to the vehicle and may thereby receive information regarding the access permission.

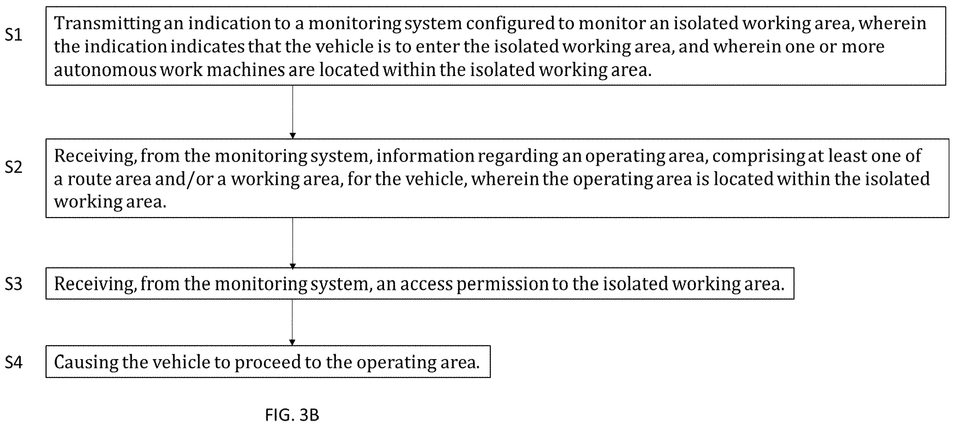

FIG. 3B illustrates another flow chart according to an example embodiment. The flow chart may be for example a method that may be performed using an apparatus such as a computing apparatus that is comprised in a manually operated mining vehicle that is operated by a user such as a person working in an operating site. First, in block S1, an indication is transmitted to a monitoring system configured to monitor an isolated working area, wherein the indication indicates that the manually operated mining vehicle is to enter the isolated working area, and wherein one or more autonomous work machines are located within the isolated working area. For example, the manually operated mining vehicle may need to reach an area within the isolated working area for performing an operation. In other words, the manually operated mining vehicle is to reach, within the isolated working area, a work area associated with the manually operated mining vehicle. The operation may also be understood as a task that is assigned to the mining vehicle. Alternatively, the manually operated mining vehicle may need to proceed through the isolated working area. In order to ensure safe entry to the isolated working area, the manually operated mining vehicle indicates to the monitoring system the need to proceed within the isolated working area. The manually operated mining vehicle may additionally be configured to indicate the purpose for the proceeding and/or the areas within the isolated working area the manually operated mining vehicle is to proceed to. In some example embodiments, the manually operated mining vehicle may be configured to provide the indication while at a passage control unit comprised in the safety monitoring of the isolated working area.

Then, in block S2, information regarding an operating area, comprising at least one of a route area and/or a work area, for the manually operated mining vehicle, is received from the monitoring system and the operating area is located within the isolated working area. The route area is an area along which the manually operated mining vehicle may safely proceed within the isolated working area and the work area is an area at which the vehicle may perform its operation without interrupting operation of other work machines within the isolated working area. The information regarding these may be received in any suitable format, for example as coordinates that illustrates the operating area with respect to a map of the operating site.

Next, in block S3, an access permission to the isolated working area is received from the monitoring system. A benefit of receiving an access permission, by the manually operated mining vehicle from the monitoring system, is that the manually operated mining vehicle then knows that it is safe to enter the isolated working area along the operating area. Thus, in block S4, the manually operated mining vehicle is then caused to proceed to the operating area.

If an operating site comprises an isolated working area within which there are autonomous work machines performing their assigned operations, the isolated working area may be understood to be in an autonomous mode. Without the ability to allow safely the entrance of a manually operated mining vehicle that is at least partly operated manually, the entrance of such manually operated mining vehicle to the isolated working area could require manual intervention with which the autonomous mode is ceased and when it is ensured that the area is cleared from any other equipment or vehicle than autonomous work machines, the autonomous mode could be set up again. Yet, as there is every now and then a need for a manually operated mining vehicle to enter the isolated working area, it is beneficial to have a flexible manner of enabling the entrance that does not require setting the autonomous mode into manual mode and then setting up the autonomous mode again.

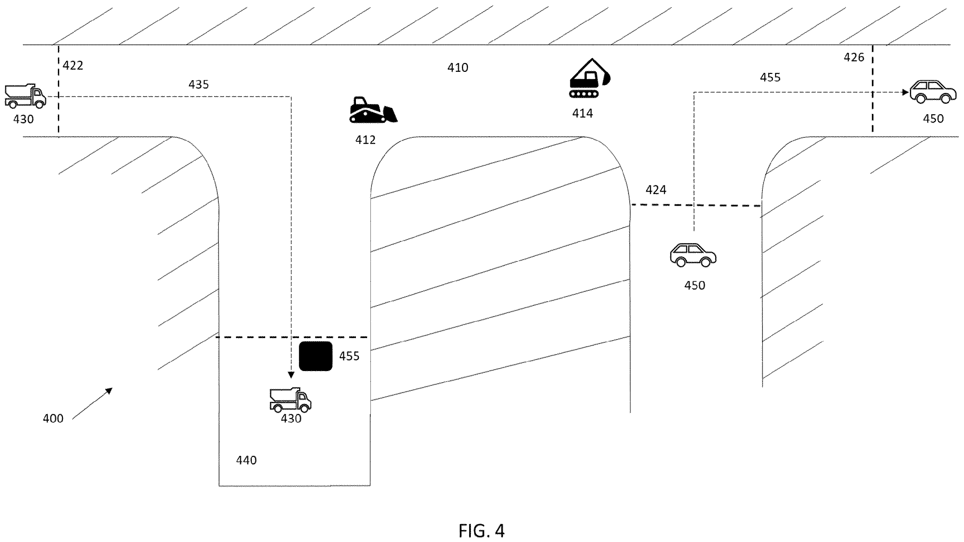

FIG. 4 illustrates an example embodiment in which an operating site 400 comprises an isolated working area 410. In the isolated working area 410, there are two autonomous work machines 412 and 414. The isolated working area is associated with a safety system that comprises passage control units 422, 424 and 426 and the safety system, as well as the autonomous work machines 412 and 414 are connected to a monitoring system configured to monitor the operating site 400. The monitoring system may also be configured to provide instructions to receive data from and/or transmit data to any work machines, vehicles and/or other device that are connected to the monitoring system.

In this example embodiment, there is a mining vehicle 430, that is driven by a driver and may thus be understood to be a manually operated mining vehicle, at the passage control unit 422. The mining vehicle 430 has been assigned a task that it should perform in work area 440. In other words, the mining vehicle 430 is to operate within the isolated working area 410. In this example embodiment, as the mining vehicle 430 approaches the isolated working area 410, it arrives at the passage control unit 422. From that location, the manually operated mining vehicle 430 then provides an indication to the monitoring system that it is to enter the isolated working area 410 and that its destination is the work area 440. Optionally, the mining vehicle 430 may also indicate, using the indication, information regarding the task that it is to perform.

In response to receiving the indication, the monitoring system may then determine the operating area for the manually operated mining vehicle 430. In this example embodiment, the operating area comprises both the work area 440 and the route 435 to the work area 440 from the passage control unit 422. In this example embodiment, there is also a pre-requisite that the manually operated mining vehicle 430 is to have a connection to the monitoring system active when entering the isolated working area 410. In this example embodiment, it is also a pre-requisite that the manually operated mining vehicle 430 comprises an emergency stop that enables it, in case of an emergency, to send a stop command to the autonomous work machines 412 and 414 to stop their operations at once.

When the monitoring system has determined the operating area for the mining vehicle 430, the monitoring system may provide information regarding the operating area to the manually operated mining vehicle 430. The information may be in any suitable format, for example, as an update to a map of the operating site 400. Additionally, the monitoring system in this example embodiment informs the autonomous work machines 412 and 414 regarding the operating area. The monitoring system also reserves the operating area for the mining vehicle 430. Reserving the operating area comprises imposing access restrictions to the autonomous work machines 412 and 414 with respect to the operating area. For example, the routes of the autonomous work machines 412 and 414 may be redirected such that they avoid the operating area. In other words, the operating area may be a blocked area for the autonomous work machines 412 and 414. Additionally, speed limitations may be applied to the autonomous work machines 412 and 414 such that their speed is reduced when the operating area is reserved.

The monitoring system may be configured to provide, upon reserving the operating area, an indication to the manually operated mining vehicle 430 that it is now safe for the mining vehicle to enter the operating area. As the mining vehicle 430 then proceeds to the operating area, the passage control unit 422 is still active, but because the monitoring system has indicated to the safety system the reserved operating area and that the manually operated mining vehicle has an access permission to the operating area, the passage control unit 422 will not react to the breach of the entrance to the isolated working area 410.

When the manually operated mining vehicle 430 has proceeded along the route 435 to the work area 440, a mobile passage control unit 445 is activated such that the entrance to the work area 440 can be monitored by the mobile passage control unit 445. Thus, the mobile passage control unit 445 can be used to secure the work area 440. The mobile passage control unit 445 may be understood as a passage control unit, that is connected to the monitoring system and can be part of the safety system, when activated, as well. Yet, the mobile passage control unit is not fixed to the infrastructure of the operating site 400 but can be moved easily to another location. In this example embodiment, the mobile passage control unit 445 is moved with the manually operated mining vehicle 430.

When the mobile passage control unit 445 has been activated, the monitoring system can determine that it is active and can then release the reservation for the route 435. The monitoring system may then provide an indication to the autonomous work machines 412 and 414 that the reservation for the route 435 has been released. The work area 440 remains as reserved and is monitored by the mobile passage control unit 445. Thus, outside the work area 440, the autonomous work machines 412 and 414 may continue their operation normally within the rest of the isolated working area 410.

When the manually operated mining vehicle 430 has performed the task that was assigned to it at the work area 440, it may provide an indication to the monitoring system that it is to leave the work area 440 and also exit the isolated working area 410. The monitoring system may then determine a suitable route from the work area 430 to an exit of the isolated working area 410. The route may be the route 435 or a different route. When the route has been determined, it is reserved for the manually operated mining vehicle 430, thereby causing a new operating area to be reserved for the mining vehicle 430. The reservation is also indicated to the manually operated mining vehicle 430, to the autonomous work machines 412 and 414 and to the safety system of the isolated working area 410. The reservation may again cause the reserved operating area to become a blocked area for the autonomous work machines 412 and 414 and also speed limitations may be applied. Also, the mobile passage control unit 445 may be deactivated. After successfully reserving the operating area, the monitoring system may indicate to the mining vehicle 430 an access permission to the route and in response the mining vehicle 430 may proceed to the reserved route. When the mining vehicle 430 has exited the isolated working area 410, the autonomous work machines 412 and 414 may return to their normal operation.

It is to be noted that in addition to reserving the operating area, there may be additional safety measures active such as a proximity detection comprised in the manually operated mining vehicle 430. The proximity detection may be configured to cause automatic stopping of an autonomous vehicle if it comes closer than a pre-determined distance to the mining vehicle.

Alternatively, or additionally, to the mining vehicle 430, in this example embodiment, there may also be a mining vehicle 450 that is driven by a driver and that is to enter the isolated working area 410. The mining vehicle 450 may wish to enter the isolated working area 410 at the same time as the mining vehicle 430 is in its work area 440 or alternatively, at a different time instance. When the mining vehicle 450 is at the passage control unit 424, the mining vehicle 450 may indicate to the monitoring system that it is to drive through isolated working area 410 to the passage control unit 426 along the route 455. Upon receiving the indication, the monitoring system may then reserve the route 455 for the mining vehicle 450 and provide information of the reserved route to the mining vehicle 450 and to the safety system and to the autonomous work machines 412 and 414. The reservation may also cause access limitations to the autonomous work machines 412 and 414 with respect to the reserved route 455 and optionally, also speed limitations may be applied to the autonomous work machines 412 and 414.

When the route 455 has been reserved, the monitoring system provides an access permission to the mining vehicle 450 and the mining vehicle 450 may proceed along the route 455. The passage control units 424 and 426 remain active, but they do not react when detecting the vehicle 450 as the route 455 is reserved. When the mining vehicle 450 has proceeded along the route, the route may be released, and the access restrictions imposed are removed. Also, if speed limitations were imposed, those are also removed.

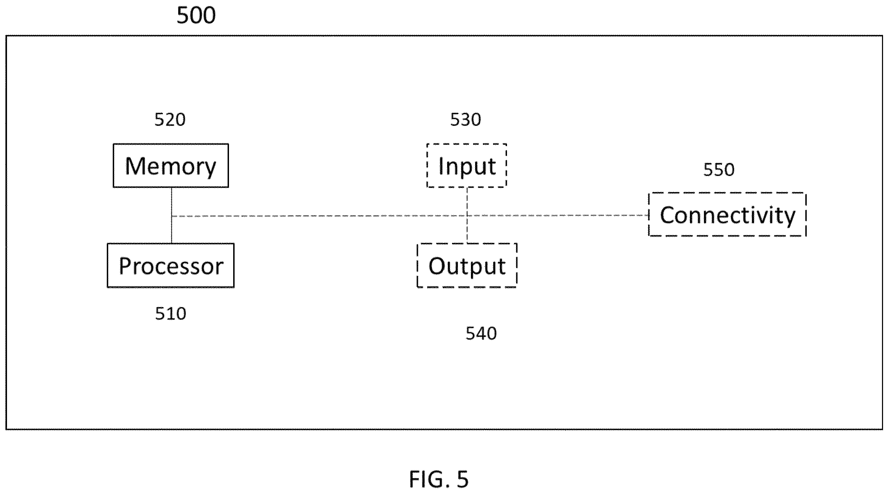

FIG. 5 illustrates an apparatus 500, which may be an apparatus comprised in another device such as a control unit comprised in a monitoring system, in a vehicle unit or in a work machine. The apparatus 500 comprises a processor 510. The processor 510 is configured to interpret computer program instructions and process data. The processor 510 may comprise one or more programmable processors. The processor 510 may comprise programmable hardware with embedded firmware and may, alternatively or additionally, comprise one or more application specific integrated circuits, ASICs.

The processor 510 is coupled to a memory 520. The processor is configured to read and write data to and from the memory 520. The memory 520 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 520 stores computer readable instructions that are execute by the processor 510. For example, non-volatile memory stores the computer readable instructions and the processor 510 executes the instructions using volatile memory for temporary storage of data and/or instructions.

The computer readable instructions may have been pre-stored to the memory 520 or, alternatively or additionally, they may be received, by the apparatus, via electromagnetic carrier signal and/or may be copied from a physical entity such as computer program product. Execution of the computer readable instructions causes the apparatus 500 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

The apparatus 500 is configured to, with the at least one processor, the at least one memory and the computer program code, cause the apparatus to receive an indication, wherein the indication indicates that a mining vehicle that is at least partly operated manually, is to enter the isolated working area. The apparatus 500 is also configured to, with the at least one processor, the at least one memory and the computer program code, cause the apparatus to determine, based at least partly on the indication, an operating area, for the mining vehicle, wherein the operating area is located within the isolated working area, and the operating area comprises at least one of a route area and/or a work area associated with the mining vehicle. The apparatus 500 is also configured to, with the at least one processor, the at least one memory and the computer program code, cause the apparatus to reserve the operating area for the mining vehicle, wherein reserving comprises imposing access restrictions to the operating area. The apparatus 500 is also configured to, with the at least one processor, the at least one memory and the computer program code, cause the apparatus to indicate, to the mining vehicle, an access permission to the operating area.

Alternatively, the apparatus 500 is configured to, with the at least one processor, the at least one memory and the computer program code, cause the apparatus to transmit an indication to a monitoring system configured to monitor an isolated working area, wherein the indication indicates that the mining vehicle is to enter the isolated working area, and wherein one or more autonomous work machines are located within the isolated working area. The apparatus 500 is also configured to, with the at least one processor, the at least one memory and the computer program code, cause the apparatus to receive, from the monitoring system, information regarding an operating area, comprising at least one of a route area and/or a working area, for the mining vehicle, wherein the operating area is located within the isolated working area. The apparatus 500 is also configured to, with the at least one processor, the at least one memory and the computer program code, cause the apparatus to receive, from the monitoring system, an access permission to the isolated working area. The apparatus 500 is also configured to, with the at least one processor, the at least one memory and the computer program code, cause the apparatus to cause the mining vehicle to proceed to the operating area.

The apparatus 500 optionally further comprises, or is connected to, an input unit 530. The input unit 530 comprises one or more interfaces for receiving input such as a user input or input from another device. The one or more interfaces may comprise for example one or more motion and/or orientation sensors, one or more cameras, one or more accelerometers, one or more microphones, one or more buttons and one or more touch detection units. Further, the input unit 530 may comprise an interface to which external devices may connect to.

The apparatus 500 also comprises, optionally, an output unit 540. The output unit comprises or is connected to one or more displays capable of rendering visual content. The output unit 540 may further comprise one or more audio outputs. The one or more audio outputs may be for example loudspeakers or a set of headphones.

The apparatus 500 may further comprise, optionally, a connectivity unit 550. The connectivity unit 550 enables wired and/or wireless connectivity to external networks. The connectivity unit 550 may comprise one or more antennas and one or more receivers that may be integrated to the apparatus 500 or the apparatus 500 may be connected to. The connectivity unit 550 may comprise an integrated circuit or a set of integrated circuits that provide the wireless communication capability for the apparatus 500. Alternatively, the wireless connectivity may be a hardwired application specific integrated circuit, ASIC.

It is to be noted that the apparatus 500 may further comprise various components not illustrated in the FIG. 5. The various components may be hardware components and/or software components.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. An apparatus for controlling access to an isolated working area, wherein one or more autonomous work machines are located within the isolated operating area, the apparatus comprising at least one processor, and at least one memory including a computer program code, wherein the at least one memory and the computer program code are configured, with the at least one processor, to cause the apparatus to:
receive an indication, wherein the indication indicates that a mining vehicle that is at least partly operated manually, is to enter the isolated working area;
determine, based at least partly on the indication, an operating area for the mining vehicle, wherein the operating area is located within the isolated working area, and the operating area comprises at least one of a route area or a work area associated with the mining vehicle;
reserve the operating area for the mining vehicle, wherein reserving comprises imposing access restrictions to the operating area; and
indicate, to the mining vehicle, an access permission to the operating area.

2. An apparatus according to claim 1, wherein the at least one memory and the computer program code are configured, with the at least one processor, to further cause the apparatus to:
allow the mining vehicle to enter the isolated working area by allowing it to proceed to the operating area.

3. An apparatus according to claim 1 or 2, wherein the access restrictions are applicable to the one or more autonomous work machines located within the isolated working area.

4. An apparatus according to any previous claim, wherein the operating area comprises the route area and the work area and the at least one memory and the computer program code are configured, with the at least one processor, to further cause the apparatus to:
determine that the mining vehicle is located within the work area and that at least one passage control unit associated with the work area is activated;
release the route area; and
keep the work area reserved.

5. An apparatus according to claim any previous claim, wherein the at least one memory and the computer program code are configured, with the at least one processor, to further cause the apparatus to:
impose a speed limitation, to one or more autonomous work machines located within the isolated working area, while at least part of the operating area is reserved.

6. An apparatus according to any previous claim, wherein the operating area comprises the route area and the work area and the at least one memory and the computer program code are configured, with the at least one processor, to further cause the apparatus to:
receive, from the mining vehicle, a request to leave the work area;
determine, based on the request, a second route area, wherein the second route area is located within the isolated working area;
reserve the second route area, wherein reserving comprises imposing access restrictions to the second route area; and
allow the mining vehicle to exit the work area and to proceed along the second route area.

7. An apparatus according to claim 6, wherein the at least one memory and the computer program code are configured, with the at least one processor, to further cause the apparatus to:
impose the speed limitation to one or more autonomous work machines located within the isolated working area, while the second route area is activated.

8. An apparatus according to claim 6 or 7, wherein the second route area corresponds to the route area.

9. An apparatus for operating a mining vehicle that is at least partly operated manually, the apparatus comprising at least one processor, and at least one memory including a computer program code, wherein the at least one memory and the computer program code are configured, with the at least one processor, to cause the apparatus to:
transmit an indication to a monitoring system configured to control access to an isolated working area, wherein the indication indicates that the mining vehicle is to enter the isolated working area, and wherein one or more autonomous work machines are located within the isolated working area;
receive, from the monitoring system, information regarding an operating area comprising at least one of a route area or a working area for the mining vehicle, wherein the operating area is located within the isolated working area;
receive, from the monitoring system, an access permission to the isolated working area; and
cause the mining vehicle to proceed to the operating area.

10. An apparatus according to claim 9, wherein the operating area comprises the route area and the work area and the at least one memory and the computer program code are configured, with the at least one processor, to cause the apparatus to:
determine that the mining vehicle is located within the work area;
determine that the mining vehicle is to exit the work area;
transmit, to the monitoring system, a request to leave the work area;
receive, from the monitoring system, information regarding a second route area, wherein the second route area is located within the isolated working area;
receive, from the monitoring system, a permission to enter the second route area; and
cause the vehicle to exit the work area and proceed along the second route area.

11. An apparatus according to claim 9 or 10, wherein the at least one memory and the computer program code are configured, with the at least one processor, to cause the apparatus to:
provide, when the mining vehicle is located within the operating area, to the at least one automated work machine an instruction that causes the automated work machine to stop, at least partly, its operation.

12. A method comprising:
receiving an indication, wherein the indication indicates that a mining vehicle that is at least partly operated manually, is to enter the isolated working area;
determining, based at least partly on the indication, an operating area for the mining vehicle, wherein the operating area is located within the isolated working area, and the operating area comprises at least one of a route area or a work area associated with the mining vehicle;
reserving the operating area for the mining vehicle, wherein reserving comprises imposing access restrictions to the operating area; and
indicating, to the mining vehicle, an access permission to the operating area.

13. A method comprising:
transmitting an indication to a monitoring system configured to control access to an isolated working area, wherein the indication indicates that the mining vehicle is to enter the isolated working area, and wherein one or more autonomous work machines are located within the isolated working area;
receiving, from the monitoring system, information regarding an operating area comprising at least one of a route area or a working area for the mining vehicle, wherein the operating area is located within the isolated working area;
receiving, from the monitoring system, an access permission to the isolated working area; and
causing the mining vehicle to proceed to the operating area.

14. A computer program comprising instructions for causing an apparatus to perform at least the following:
receive an indication, wherein the indication indicates that a mining vehicle that is at least partly operated manually, is to enter the isolated working area;
determine, based at least partly on the indication, an operating area for the mining vehicle, wherein the operating area is located within the isolated working area, and the operating area comprises at least one of a route area or a work area associated with the mining vehicle;
reserve the operating area for the mining vehicle, wherein reserving comprises imposing access restrictions to the operating area; and
indicate, to the mining vehicle, an access permission to the operating area.

15. A computer program comprising instructions for causing an apparatus to perform at least the following:
transmit an indication to a monitoring system configured to control access to an isolated working area, wherein the indication indicates that the mining vehicle is to enter the isolated working area, and wherein one or more autonomous work machines are located within the isolated working area;
receive, from the monitoring system, information regarding an operating area comprising at least one of a route area or a working area for the mining vehicle, wherein the operating area is located within the isolated working area;
receive, from the monitoring system, an access permission to the isolated working area; and
cause the mining vehicle to proceed to the operating area.
